# EUROPEAN PATENT APPLICATION

(11) **EP 2 108 662 A1**
(43) Date of publication of application: **14.10.2009**
(21) Application number: 08007102.0
(22) Date of filing: 10.04.2008
(51) Int. Cl.: C08F 18/08

(54) **Process of copolymerization in emulsion of 1-Alkenes and vinyl esters with high conversion**

(71) Applicant: Hexion Specialty Chemicals Research Belgium S.A., 1348 Ottignies Louvain-la-Neuve (BE)
(72) Inventor: Reeb, Roland, 93306 Aubervilliers (FR); Peter, Ulrike, 93306 Aubervilliers (FR)

(57) **Abstract**

New process conditions are described and more particularly emulsion polymerization of compositions which are based on copolymers of vinyl acetate, straight chain α-olefin and an optional third different olefinically-unsaturated co-monomer in which the α-olefin is emulsified prior the addition into the polymerization mixture.

## Description

This invention is directed to new process conditions and more particularly to the emulsion polymerization of compositions which are copolymers of vinyl acetate, straight chain α-olefin and a third, different olefinically-unsaturated co-monomer in which the α-olefin is emulsified prior the addition into the polymerization mixture.

Copolymers of vinyl acetate have found wide use in a number of applications and particularly in the form of aqueous latices as coating compositions such as paints, as redispersable powder for cement additives and adhesives. However, the inherent properties of the vinyl acetate itself require plasticization of the polymer in order to avoid the hard, brittle properties of the vinyl acetate component. Vinyl acetate copolymers have been plasticized by the use of external plasticizers such as dibutyl phthalate but the tendency of such materials to leach out from the films renders them unsatisfactory for many applications. The more preferable method of plasticizing vinyl acetate polymers is by means of internal plasticizers or plasticization with comonomers such as the maleates and acrylates. However, the use of such plasticizing comonomers introduces undesirable characteristics to the polymers along with the plasticizing effects. For example, relatively high levels of alkyl acrylates must be used to achieve the desired degree of flexibility in a vinyl acetate polymeric film when used as a paint. Such comonomers also serve to alter and diminish to an undesirable extent the properties of the vinyl acetate itself.

It has now been found that by copolymerizing a relatively low amount of a straight chain α-olefin with a predominant amount of vinyl acetate and one or more comonomers, advantageous properties can be imparted to the resulting polymer without the deficiencies of the prior art compositions.

The chemical behavior of the α-olefins in radical polymerization is different from other vinyl monomers. Using the mixture of 10 to 15 % of α-olefins and vinyl acetate for example will lead to low incorporation of the α-olefin into the polymer due to disproportion reaction. Several process conditions have been suggested over the passed decades. The US 3,689,432 claims that the use of t-dodecyl mercaptan and zinc formaldehyde sulfoxylate is an option. In US 3,755,237 the presence of specific unsaturated monomer helps to increase the incorporation of the α-olefins when used in low percentage and for α-olefin of up to 9 carbon atoms so the mandatory presence of a third olefin works in limited number of specific cases. The GB 1,104,536 and GB 1,111,168 are limited to the preparation of lattices containing α-olefins with 6 or 8 carbon atoms. More recent work as in WO 2007/113180 or WO2007/012616 propose that the presence of a seed of polystyrene increase the conversion for α-olefins with carbon atoms chain from 5 to 12 with working examples based on 1-octen.
As showed in the prior art the interest of the industry to have a process that is suitable for the preparation of latices with a high level of α-olefin incorporation is still present.

Therefore, it is an object of the present invention to provide a means for conducting the emulsion copolymerization of vinyl acetate and at least on α-olefin, with high level of olefin conversion and certainly >95% and preferably ≥ 98%.

We have found that the incorporation of high level of α-olefins with carbon atoms chain of 9 to 25 units are successfully reacted with vinyl acetate by adding the pre-emulsified α-olefin in presence of a surfactant and a colloid protecting agent.
The pre-emulsion comprises the α-olefin, a small portion of vinyl acetate and optionally other unsaturated polymerizable monomers, a colloid protecting agent such as PVOH(which is 85-99 mole% hydrolyzed, especially 87 to 89% mole% hydrolyzed), surfactants and antifoaming agents. The α-olefin is introduced in a level from 5 to 20 weight%, with preferred range between 10 to 15 wt% on total monomer content. The other unsaturated polymerizable monomers can be selected form acrylic or methacrylic alkyl esters and or cycloalkyl esters, ethylene, vinyl ester such as VeoVa (vinyl ester of tertiary branched acid, ex Hexion Specialty Chemicals) and mono or diesters of maleic acid.

The α-olefin carbon chain used in the invention will be out of 9 to 25 units, with preferably 12 to 18 units.

With this process we achieve particles sizes of the polymer distribution within the range 0.1µ-10µ, and preferentially between 0.2µ and 4µ, and more preferentially between 0.2 and 1µ.

### Examples

General procedure:

A 6 liters reactor is equipped with a condenser and mechanical agitator, is charged with 1430 g of demineralized (demi) water, 742.5 g of vinyl acetate, 19 g of t-butyl perbenzoate and 1247 g of the pre-emulsion consisting of: 355 g of demi water, 532 g of a PVOH 5/88 solution at 24.9% solids content, 20,3 g of Emulgator K30 (20% solution), 67.5 g of vinyl acetate, 2.2 g of anti foaming agent and 270 g of α-olefin in C16. The pre-emulsion is obtained by using a high shear homogenizer of Ultraturax type, the reactor is further flushed with nitrogen and gradually heated up to 66°C, when temperature is reached the solution of initiator is added to the reactor, the initiator solution consisting in 5.4 g of potassium persulfate and 5.4 g of sodium bicarbonate in 60.7 g of demi water. After complete addition the temperature is raised to 90°C, after 1 h and 15 minutes a solution of 54 g water, 1.1 g of potassium persulfate and 6.8 g of sodium bicarbonate. After 2h and 25 minutes a second addition of vinyl acetate (1485 g) over a period of 5 h is added and also a solution consisting in 101 g of demi water and 7.7 g of TPHP as 70% solution and also a solution of 146 g of demi water and 16.2 g of erythorbic acid. We do also a spot addition of 12 g of t-butyl perbenzoate 30 minutes after the end of monomer feeding.
During the polymerization the temperature in maintained between 81 to 88°C and at the end the temperature raised to 92-93°C. After a total batch time of 9 h the reactor is cooled down to room temperature.
Latex properties of the above example A is given in the next table together with example B and D according to the invention and example C as reference.
For example B a third monomer is used (10 weight% on total mononmers of VeoVa 10 ex Hexion specialty Chemicals).

**Table: Properties of the emulsions**

| Ex | % C16 | % VeoVa | Visco mPa s | particle size ** | MFFT °C | residual olefin ppm | Olefin conversion % *** |
|---|---|---|---|---|---|---|---|
| A | 10 | - | 2665 | 0.4 | 6.4 | 236 | 99.5 |
| B | 10 | 10 | 3160 | 0.4 | 4.8 | 67 | 99.9 |
| C * | 15 | - | 860 | 4.5 | 10.4 | 31000 | 58 |
| D | 15 | - | 1670 | 0.4 | 2.4 | 5000 | 96 |

| | | | | | | | |
|---|---|---|---|---|---|---|---|
| * comparative example: olefin is not pre-emulsified ** D50 in µ determined with Malvern Mastersizer 2000 ***residual monomer measured by Head-Space gas chromatography MFT = minimum film formation | | | | | | | |

## Claims

1. A process to provide an emulsion copolymerization of vinyl acetate and at least one α-olefin, with high level of conversion of the olefin and optionally other unsaturated polymerizable monomers.

2. The process of claim 1 by adding the pre-emulsified α-olefin in presence of a surfactant and/or a colloid protecting agent.

3. The process of claims 1 to 2 in which the α-olefin contains carbon atoms chain of 9 to 25 units, with preferably 12 to 18 carbon atoms and most preferred from 14 to 16 carbon atoms.

4. The process of claims 1 and 3 in which the α-olefin is introduced in a level from 5 to 20 weight%, with preferred range between 10 to 15 wt% on total monomer content.

5. The process of claims 1 to 4 **characterized in that** the conversion level of α-olefin is >95% and preferably ≥ 98%.

6. The process of claims 1 to 5 **characterized in that** the other unsaturated polymerizable monomers are selected form acrylic or methacrylic alkyl esters and or cycloalkyl esters, mono and diesters of maleic acid, ethylene, vinyl ester.

7. The emulsion composition obtained according to any previous claim.

8. The emulsion of claim 7 with particles sizes of the polymer distribution within the range 0.1µ-10µ, and preferably between 0.2µ and 4µ, and more preferably between 0.2 and 1µ.

9. The use of the emulsion of claims 7 and 8 in coating, adhesives, redispersable powder for cement.
